# EUROPEAN PATENT APPLICATION

(11) **EP 1 437 693 A1**
(43) Date of publication of application: **14.07.2004**
(21) Application number: 03394004.0
(22) Date of filing: 08.01.2003
(51) Int. Cl.: G07F 7/00, G07B 15/02

(54) **A mobile telecommunications billing routing system and method**

(71) Applicant: Itsmobile Limited, Dublin 14 (IE)
(72) Inventor: Grimes, James, Dublin 18 (IE); McGuinness, Donal, Dublin 14 (IE)
(74) Representative: Lane, Cathal Michael

(57) **Abstract**

A system and method of enabling a transaction by a remote user for a service having an associated access number is described. The present invention enables a mobile user to pay for services and/or goods using their mobile telephone. A routing system is provided that is adapted to select the correct billing destination for a specific customer based on the customer parameters. This enables two or more billing systems to be used so that the user is not restricted to a specific operator or mobile wallet application when conducting transactions.

## Description

### Field of the Invention

The invention relates to the field of mobile telecommunications and particularly to a routing system that is adapted to determine a correct billing system in mobile commerce applications. In a preferred embodiment of the invention a routing system is provided that determines a correct billing destination for a mobile telecommunications user who wishes to pay for car parking or other remote services using his mobile phone or device. Within the present specification the term "mobile phone" is intended to cover any wireless telecommunication device including but not limited to cellular telephones, personal digital assistants (PDAs) and the like.

### Background to the Invention

Mobile commerce or M-Commerce has developed rapidly with the growth of mobile telecommunications. With the market penetration of users having their personal mobile telephone or other similar wireless communications device extending to the high percentages, there have been constant developments in the provision of applications and services relating incorporating such mobile devices.

Many of the applications developed thus far are operator specific. For example operators such as Vodafone™ and T Mobile™ have developed mobile wallet based systems that enable a user to pay for a plurality of different services such as the purchase of cinema tickets, the ordering of mini-cab and taxis and similar activities using the billing account associated with the mobile user.

Extensions of such m-commerce applications to the specific field of car parking are also known. Providers such as Itouch in Australia provide, in conjunction exclusively with the cellular operator Singtel Optus, a virtual parking program that enables drivers to use their mobile phones for car parking payments. Their iPark scheme requires car owners to register their vehicle for iPark so they can be given a windscreen sticker that carries a bar-code. Parking time can be bought via mobile phone by calling the iPark call centre. Parking inspectors are provided with PDA devices to enable them to check the status of the car parking validity by scanning the displayed bar-codes for information on the vehicle. The billed cost is paid directly to the iPark operator, who then relays a portion of that amount to the city council with authority for the parking.

Other services such as that offered by EMT in Estonia provide for the operator (EMT) to provide micro-billing services to the traffic regulation agency. Through an operator the traffic regulation attendants can get information on cars which have paid for parking by using their Mobile Parking service. Users subsequently pay for parking while paying their mobile phone bill, the amount being deducted from the pre-paid or monthly account. With the EMT system the users simply pay for the time they actually parked, a call/data message to the provider initiates the charge time and a subsequent call terminates the call charge. As it uses a dedicated sub account system within the main mobile telecommunications account, the EMT system requires a user to open a parking account and the user can then add money to the parking account.

Both these systems require the creation or use of a specific account to enable a user to utilise their mobile telephone in the payment of car parking. Either the tariff is deducted directly from an account established with the applications provider or from the account of the operator providing the service. Such implementations are unsatisfactory in that service availability is often limited to a subset of the customer base due to the complexities of offering billing to a range of payment providers, e.g. payment by credit card only, only available to Vodafone customers etc. This is especially undesirable where the organisation which the service is being provided on behalf of (e.g. a city council) should not be seen as having allegiances to a particular payment provider, e.g. one mobile operator over another. Furthermore, where one payment provider is operating the service, the provision of further payment options may result in the addition of a service premium for the new customers e.g. 50c call premium for Meteor™ customers to use a Vodafone™ service. Yet a further disadvantage associated with known arrangements derives from the inherent disadvantages of using a single payment provider to operate such a service. The provision of alternative payment options by a first provider to, for example, customers of different payment providers may result in a differing and often less convenient service interface for the new customers. For example Meteor™ customers may need to go through additional steps on a Vodafone™ IVR service or use a different number.

One area where the service for use by subscribers to differing operator networks has been extended is in mobile phone accessories such as ringtones, logos and games. These are often available through service agents for customers of multiple mobile operators. Payment is generally made through the use of a premium rate call or a premium rate SMS which is generally handled through a single pre-appointed mobile network, or in the case of premium rate SMS, a different number for each mobile operator is sometimes used to access the service. In this case it is the underlying number which is called, or to which the message is sent to which identifies the billing agent as is the case with normal calls/text messages. The service agent would have a contractual agreement with each of the operators to invoice for a percentage of the communication charge levied to the customer.

It will therefore be appreciated that although m-commerce applications are known, most m-commerce services are operated with a defined registration and billing agent, such as the incumbent cellular operator in the region or a progressive banking organisation. Although the services offered may differ, only one payment provider will be involved.

It is therefore an object of the present invention to provide for an improved m-commerce routing system that can enable an intelligent billing of specific transactions.

### Summary of the Invention

Accordingly the present invention provides a mobile commerce billing system that enables an interrogation of the request for a transaction and, based on that interrogation, the routing of a tariff for that transaction to a suitable billing service provider.

According to a first embodiment of the present invention a method of enabling a transaction by a remote user for a service having an associated access number is provided. The method comprises the steps of:
receiving a request from the user via said access number at a central processing server,
identifying the user from the request,
determining a valid billing destination from a plurality of available billing destinations for the identified user, and
effecting an authorisation of the service for said user upon determination of a valid billing arrangement.

The service is, in a first embodiment, a payment for car parking. In effecting the use of the system for car parking, the type of car parking is typically selected from one or more of the following car parking types:
pay and dispay car parking
meter bay car parking, and/or
virtual parking.

The service may alternatively be the obtaining of a desired product from a vending machine or the obtaining of a ticket or receipt from a ticket dispensing machine or ticket collection service. In yet a further embodiment the service is the obtaining of a pass/ticket for a mass transit system.

The request is desirably received from the user over a mobile telecommunication network, and typically the user is identified by means of an unique identifier specific to that user for use in the mobile telecommunication network. In a preferred embodiment, the unique identifier is an IMSI associated with a mobile telecommunication device associated with the user.

Typically, the user is identified from the request by effecting a comparison of a user identifier specific to the user with a database of stored users. The database may be co-located with the central processing server.

If a matched identifier is not found in a database co-located with the central processing server, the method may include the additional step of:
querying one or more remote databases, each of the queried databases being associated with a specific one of the plurality of available billing agents, so as to determine whether the received request is associatable with a subscriber to the one or more available billing agents.

The querying of the remote database is desirably effected in an order based upon a "best guess" principle.

The available billing destinations preferably include one or more telecommunications operators. This enables the system and method of the present invention to interface with a plurality of operators, thereby making the services and transactions that may be conducted using the present invention independent of the operator with whom the user is subscribed.

The invention also provides a mobile commerce billing routing application system adapted to determine a correct billing destination from a plurality of available billing destinations for a transaction conducted by a mobile user, the system comprising:
means for receiving a transaction initiated request from a mobile user,
means for interrogating the request so as to determine whether the request is from an authorised user,
means for associating the authorised user with one of a plurality of available billing destinations, the means for associating effecting said association based on an interrogation of the request,
means for determining whether said authorised user is authorised to conduct said requested transaction,
means for authorising said transaction upon determination that the request is authorised, and
means for debiting said user's account at the selected billing destination.

These and other features of the present invention will be better understood with reference to the following drawings.

### Brief Description of the Drawings

Figure 1 shows a system architecture according to the present invention,
Figure 2 shows in flow chart form a sequence of interactions from a CPS perspective to authenticate/authorise a mobile originating transaction,

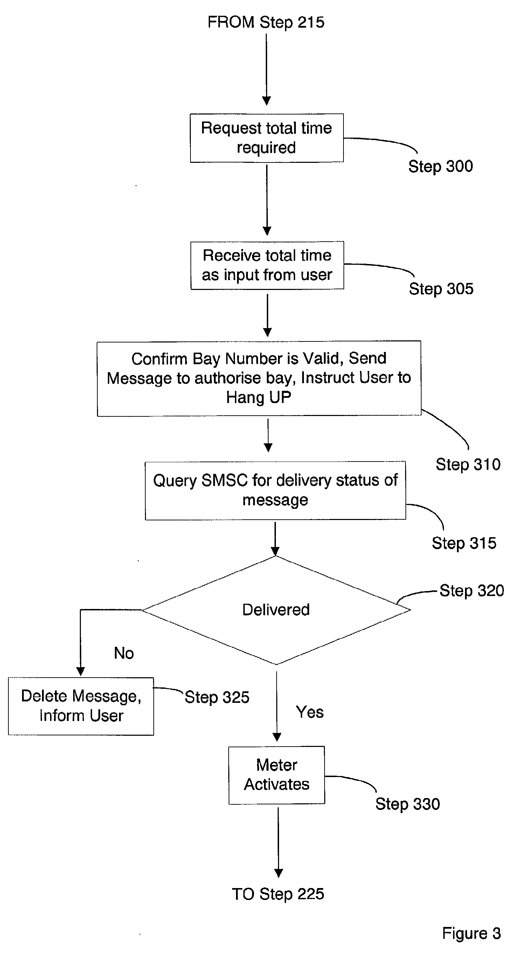

Figure 3 is a flow chart showing steps associated with payment of car-parking in a parking bay environment,
Figure 4 shows steps associated with effecting a subsequent top-up of car parking according to the present invention, and
Figure 5 shows in schematic form a flow sequence associated with enforcement of parking in a virtual parking environment.

### Detailed Description of the Drawings

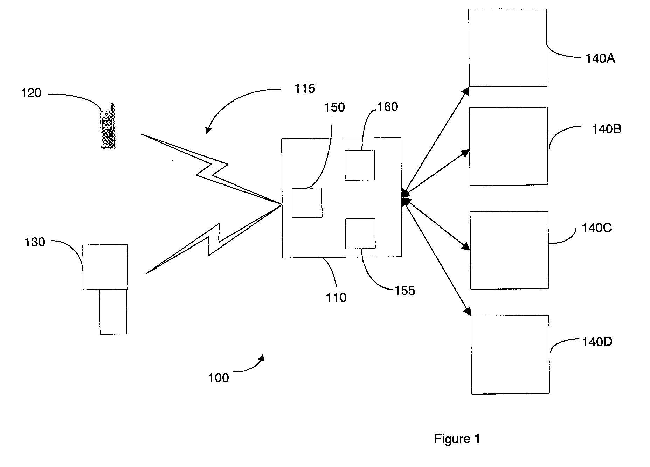

Figure 1 shows a system architecture 100 according to the present invention, adapted to enable the intelligent routing of the tariff associated with one or more mobile originating transactions to a correct billing system for the specific mobile user.

The system architecture provides for a central processing server (CPS) 110 adapted to communicate over a COMS communication link 115, such as that provided by the GSM network, with a mobile user 120 and the service utility 130 with which the user wishes to conduct a transaction. For the ease of explanation the service utility will initially be described with reference to the car parking and in this first embodiment of the invention, the system architecture is used by a user wishing to pay for parking at a specific car-parking meter. The CPS is adapted to interrogate the incoming request from the mobile user and based on the interrogation, to route the tariff associated with the specific transaction to one of a plurality of different billing systems 140A, 140B, 140C, 140D.

The system of the present invention provides an aggregation of registration agents and payment services. As discussed above with reference to the prior art, most m-commerce services are operated with a defined registration and billing agent, such as the incumbent cellular operator in the region or a progressive banking organisation. Only one payment provider is traditionally involved, or where multiple payment providers are utilised the service provided is the same but the access numbers for the service differ depending on the payment provider desired.

The system of the present invention differs in that its range of services is available to all mobile phone customers (both post paid and pre paid), regardless of network. This also means that to use the services offered by the present invention e.g. mobile parking payments, motorists may not actually ever need to register with the system of the present invention in that it is adapted to ascertain correct payment services for those parties that interact with the system regardless of whether the user has pre-registered with the system of the present invention or not. If motorists are already registered for a payment service supported by the present system architecture then they will automatically be able to use its services.

As will be described below with reference to exemplary embodiments of the present invention, authentication & authorisation begins the moment a user's, specifically in the illustrated embodiments a motorist, call is answered by the system. While a greeting message is being played to the motorist using, for example, an Interactive Voice Responder sub-module, a separate parallel process is performing the authentication & authorisation procedures. It will be appreciated by those skilled in the art that an IVR system is exemplary of the type of interaction module that may be provided to provide a communication link between a user and the system of the present invention. Some examples of alternative methodologies include, but are not limited to, SMS, USSD, WAP, Web and radio communication such as bluetooth based consumer interactions.

As this initial interaction between the system and the user of the system generally takes a matter of seconds, the motorist does not perceive any delay in the procedure.

There are 3 things that ideally need to be ascertained when a user calls the service.
1.Are they registered?
2.Who are they registered with?
3.Have they got a credit rating to support this transaction?

The system of the present invention queries each of the registration agents/payment providers in turn to see if the user is registered with that agent. Typically the sequence in which the payment providers are queried is as detailed below, although as will be appreciated by those skilled in the art that the sequence of the interrogation is not intended to be limited to any specific order. It will be further appreciated that there is no limit to the number of service providers that may be queried, but with many providers, different sequences will be employed based on the identifier associated with the mobile user so as to provide a best guess basis to try get a hit in the first or second check.

The first registration agent queried is the registration agent 155 integrally provided with the system of the present invention. This is a database of customers who have registered directly with the system of the present invention for payment by Credit Card/Debit card which are supported through the system's payment engine 160. It will be appreciated that the system may additionally be used with loyalty schemes such as the following:
Coupon Schemes: The consumer initially sends to the operator of the system of the present invention his coupon information which may be paper, internet or SMS based for example. Based upon the value of this coupon credit a user's account is created, which is adapted to hold and store in a stored value platform on the server an amount equivalent to the deposited coupon. The coupons, be they paper or electronic, would also be stored and could be referenced at any time.
Loyalty bonus: Electronic loyalty bonuses could be handled in the same way as coupons or alternatively the system may be adapted to effect an interrogation of a third party system for a consumers loyalty point status in a manner similar to how mobile payments have been described.

If this is not the correct registration agent, the CPS 110 will then query, in real-time, the rest of the registration agents/payment providers (140A-140D) in turn until a match for the user is found. These registration agents may be, for example, mobile operator payment platforms, EDD (Electronic Direct Debit) to bank accounts, 3^{rd} party m-wallet platforms, loyalty schemes such as Motor Fuel Cards, Department Store Cards or Airline cards, etc. Typically, the interaction may be effected using a plurality of means & protocols such as HTTP, XML, TCP/IP, SOAP, FTP.

Once the correct registration agent is identified, the system requests authorisation for the transaction which is about to take place. There are typically 2 considerations here:
a. If the system does not know details of the cost of the transaction (as will be described below with reference to an implementation with a parking meter system), it requests payment authorisation for a maximum parking amount. This could be based on the maximum cost for parking in that city/region, or could be more location specific and be based upon the maximum cost for parking on that actual machine.
b. If the system knows the details of the cost of the transaction (as will be described with reference to the examples of multi bay parking meters or Virtual Parking solutions), it requests payment authorisation for the exact amount from the payment provider. Obviously, this can only happen later in the process when the amount has been supplied by the user, but again actual payment provider identification could have been done in parallel with the greeting message so authorisation would be almost instantaneous.

Once authorisation for the amount is returned from the relevant payment provider, the meter can be activated and the transaction enabled.

Some intelligent routing may be applied to speed up the process. Examples of such intelligent routing are set out below, but again it will be appreciated that these are exemplary of the type of techniques that may be utilised to effect an efficient routing of the tariff associated with the transaction.
1. Best Guess Payment Provider Routing. Based on the information provided from the call, i.e. the caller ID, the CPS will take a best guess at which payment provider should be used for authentication & authorisation. The CPS registration agent will generally always be checked first (as this is a local database it is extremely quick), but after this the caller ID is checked to see which payment provider (in the territory) it most likely belongs. For example, in Ireland the prefix +35387 will more than likely be Vodafone Ireland so this payment provider is checked first. If this proved to be not the case then other supported Irish based payment providers would be checked. The success rate on this type of routing will lessen depending on the situation with number portability in each country, but it is not anticipated to lessen by much for some time. It will be understood that a principle such as the Best Guess principle can be further extended by the application of predefined system filters & rules such as transaction value constraints, transaction type constraints, purchase pattern, etc. in order to provide additional flexibility to the billing routing process.
2. Registration Agent Caching. In a situation where there are a significant number of registration agents supported by the system of the present invention, registration agent caching will occur. The first time a customer accesses the CPS 110, their registration agent details will be cached, i.e. Caller ID +3538xxxxxxx uses registration agent Y. Any subsequent time the customer accesses the service this registration agent will be checked first. If this is not successful, then best guess routing can be applied and the cached details can be subsequently updated.

In preferred embodiments, clearing & settlement of the day's transactions will generally take place at the end of that day. It will be appreciated that in order to implement such a delayed clearing of the transactions, the CPS should maintain a cache or database of the transactions that have been conducted during a defined time period so as to ensure that all transactions are then subsequently reconciled with the correct payment agent.

The Authorisation process has the effect of ensuring that a customer has sufficient funds to make a transaction and/or places a hold on those funds in their payment provider account. Clearing & Settlement is the actual confirmation of the debiting of these funds from their payment provider account. The charge will appear on the user or customer's bill as per the merchant ID, (i.e. Dublin City Council Mpark™ for parking or Coca Cola™ Vending services for vending).

The billing statement will generally show transactions as a transaction of the underlying product supplier for whom the service is being brokered e.g. Dublin City Council, Ormonde Cinemas etc. No routing algorithm need be applied for settlement as when the transaction initially took place, the details of the payment provider being used were stored with the transaction details.

Based on the user processes described below with reference to applications of the present invention, there are a number of scenarios for settlement and clearance.
1. Pay & Display Parking Meter Process. Settlement takes place at the end of the day when the actual transaction amounts are returned from the meter.
2. Bay Meter Process. Settlement takes place at the end of the day when the transaction confirmations are received from the meter. This is just an additional level of system resiliency to ensure that transaction information which was sent to the meter via SMS (for example) did in fact actually make it to the meter and cause a transaction to take place on the meter.
3. Virtual Parking. The transaction settlement happens in real-time, i.e. when the motorist calls the system.

The invention will now be described with reference to specific applications which have been highlighted above as being exemplary of the type of applications of the system and methodology of the present invention.

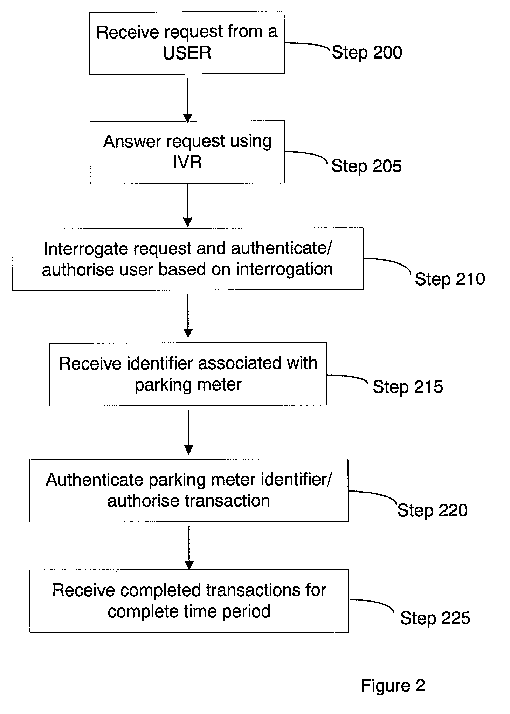

Figure 2 shows a flow chart illustrating an exemplary sequence of interactions between a user of the system of the present invention and the CPS so as to provide for a correct billing of a mobile originating transaction in the arena of car parking using a pay and display type payment meter.

Initially a *registered* motorist parks their vehicle and using their mobile phone, calls a unique number (displayed prominently on meter), typically an ISDN/PSTN number which is used to access the CPS 110, which in this embodiment is a mobile parking payments service. It will be understood that the term *registered* is not intended to limit the application of the present invention to users who have specifically registered for the services offered by the present invention, as all that is required is that the user needs to be subscribed to at least 1 m-commerce payment service, or a payment or loyalty service which can be interrogated by a third party m-commerce application in order to eventually bill this transaction via their mobile phone. This process may be as simple as ticking a box, for example, when signing up for a contract mobile phone account from a mobile operator.

It will be further understood that, according to the present invention, the same access number is used to access the specific service by all motorists at any location in the city/town/region where the service is being operated. The call is received (Step 200) and answered by an IVR (Interactive Voice Response) system which greets the motorist with an automated greeting (Step 205). The IVR system is typically a hardware & software sub-module within the CPS.

While the greeting is being played to the motorist, a separate process is authenticating & authorising the motorist based on the MSISDN (caller ID) received from the motorist's phone, (Step 210).The interrogation can be done on a dual basis with an initial interrogation done to authenticate/identify the registration source of the customer. This involves an internal interrogation of the CPS specific registration database and then if necessary an interrogation of external billing systems using the best guess principal until such time as the registration source is identified or the customer is identified as not subscribed to any supported m-commerce payments service. Further interrogation is done with the identified billing system (which we have now identified as either internal or external) to authorise/confirm creditworthiness of the customer for the transaction.

In specific embodiments, the system may be adapted to conduct further additional internal interrogation for fraud management purposes. The fraud management system is a module which ascertains if a user is possibly using the services in a fraudulent manner. Each time a customer calls the service their MSISDN and subsequent interactions with the system are recorded. If the system (based on preconfigured fraud parameters) feels that the customer is using the system suspiciously then they will be blocked from using the service. An example of this is a customer who is attempting to make 3 or more parking transactions within a short space of time. As this is an unlikely customer usage pattern, the fraud system would block further transactions from that mobile phone for a period of time.

Optionally and not shown in the sequence of steps outlined in Figure 2, the IVR system may request a personal identifier number(PIN) from the motorist as an additional security measure. This PIN would have been supplied & confirmed upon an initial registration with the system of the present invention. The motorist enters the PIN using the keypad on their mobile phone and this information is communicated to the IVR as DTMF (dual tome multi frequency) tones over the GSM & ISDN network.

The IVR system then requests the motorist to enter the unique parking meter number (generally 4 digits) for that meter (displayed prominently on meter) (Step 215). The motorist enters this meter number using the keypad on their mobile phone, and this information is communicated to the IVR as DTMF tones.

Once the CPS has confirmed that the parking meter number is valid (Step 220), it sends a transaction initiation message to the parking meter in the form of an SMS (Short Message Service) using the GSM network. This transaction information may include, amongst other data, a personalised greeting for the motorist, e.g. 'Good Morning Mr Jones' which is subsequently displayed on a liquid crystal display (LCD) or similar type display means on the meter. SMS messages are dispatched using the SMPP protocol to communicate directly with an operator's SMSC (short message service centre) which provides increased quality of service for SMS communications. The motorist is instructed that they may now hang up the call.

Where SMS is used as a communication medium between the CPS and the remote user, the CPS may optionally query the SMSC for the delivery status of the SMS as:
- This will indicate current successful/failed initiation of a transaction (if the SMS is delivered to the remote terminal, the transaction will subsequently always be successfully initiated)
- If there is a delay in the delivery of the SMS and therefore in the initiation of the transaction then the CPS may communicate with the SMSC so as to cancel the SMS from the SMSC as the customer may have abandoned the remote terminal device and in order to obviate the possibility of a third party interacting with the remote terminal at the initial customer's expense it is advantageous that a delay time-out be provided.

By implementing a time-out feature in the communication system it will be appreciated that the user only needs wait a fixed duration before knowing that a transaction will not be a success. The motorist, in the case of parking applications, will become aware of this due to the fact that there is no activity on the meter.

The meter activates on receipt of the SMS communication and allows the motorist to select how much parking they wish to purchase by using incrementing (and possibly decrementing) buttons on the meter. When the motorist has selected how much parking they require, they press the validation button on the meter and the ticket is printed. This ticket should be displayed in the vehicle as usual.

Complete transaction values are returned by the meter to the CPS at the end of the day via a mobile data call communication over the GSM network (Step 225).

In an alternative application of the present invention within the car parking environment, the billing routing described above with reference to a stationary parking meter may also be extended to the type of parking provided by Bay Meters. Bay Meters are a specific type of parking meter which don't require tickets to be printed, but rather information regarding the validity of a parking transaction is held on the meter. Where bay meters exist, the roadways are marked with individual parking space (bay) numbers. Generally there are about 9 bays per bay meter. When the motorist purchases parking from a bay meter using coins, they insert the coins and select which bay they are parked on using a keypad on the meter. No ticket is printed, but instead the bay meter retains the transaction information. When an enforcement officer arrives, they can query the status of each bay on the bay meter to see if any parking is expired. For convenience bay meters often have a series of lights, one for each bay which comes on when the parking for a bay has expired.

The implementation of such a bay meter parking system uses the following mobile payment user process, which is the same as that described with reference to Figure 2 apart from the inclusion of additional steps specific to bay meters. As before where the user was requested to enter the parking meter number, in the case of bay meter parking, the user is requested to enter the bay meter number. The user is then requested to enter the actual bay number which they are parked in. The motorist enters this meter number using the keypad on their mobile phone, and this information is communicated to the IVR as DTMF tones.

As the information relating to the parking is held centrally as opposed to printed and displayed on the vehicle which is being parked, it is necessary to further request information relating to the time required for parking. As shown in Step 300, which would normally follow a sequence of steps similar to those described in Steps 200-15 of Figure 2, the CPS system will then request, using the IVR system, the motorist to enter the number of minutes parking they wish to purchase or the amount (euro/cents/etc.) of parking they wish to purchase. The motorist enters this using the keypad on their mobile phone (generally in the lowest denomination), and this information is communicated to the IVR as DTMF tones (Step 305).

Once the CPS has confirmed that the bay meter number is valid, it sends a transaction initiation message to the bay meter in the form of an encrypted SMS using the GSM network. SMS messages are dispatched using the SMPP protocol to communicate directly with an operator's SMSC (short message service centre) which provides increased quality of service for SMS communications. The motorist is instructed that they may now hang up the call (Step 310). The CPS will query the SMSC 20 seconds later to request the status of the SMS message to the bay meter (Step 315, Step 320). If the message has not yet been delivered it is likely there is some form of communications problem so the CPS will request the SMSC to delete the message meaning the meter will never receive its transaction (Step 325). The motorist will be contacted via SMS to their mobile phone to notify them of this fact.

The meter activates on receipt of the communication and displays a message confirming the transaction (Step 330). There is no interaction between the motorist and the bay meter at this point - the transaction is complete. At the end of a predefined time period, such as at the end of a day, the CPS will then communicate with the payment agents updating the cost incurred by each user of the parking system during that time period. Such a communication is similar to that described with reference to Step 225 of Figure 2.

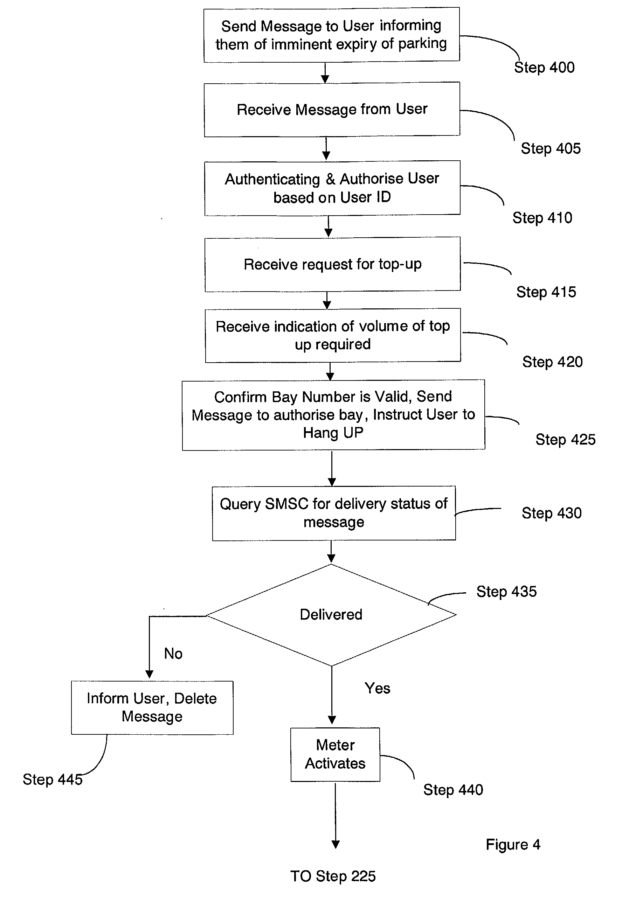

An advantage of bay meters is that you don't necessarily have to be present at the meter in order to carry out a mobile parking payment transaction as there is no ticket issued. This means that you can extend your parking time while in the office, shop, etc. Extending the transaction can be done via mobile call, SMS, or Web. Below is described, with reference to Figure 4 and an exemplary embodiment of the top up process, a top up process using a mobile call.

The motorist will receive an SMS shortly before their parking expires to indicate the imminent expiry (Step 400).

The motorist calls a unique PSTN/ISDN number (displayed prominently on the bay meter) which is used to access the mobile parking payments service. The same number is used to access the service by all motorists at any location in the city/town/region where the service is being operated. (Step 405). This number is typically included, for the customer's convenience, in the SMS sent to the user in Step 400. One convenient advantage of this is that on most mobile handsets, if you receive a text message with a number in it, e.g. 'To top up, please call 0861212121', pressing the call button on the mobile handset while the message is displayed will call the first phone number which is present in the text of the message.

The call is answered by the IVR (Interactive Voice Response) system which greets the motorist with an automated greeting. As was described before with reference to the initial transactions, while the greeting is being played to the motorist, a separate process is authenticating & authorising based on the MSISDN (caller ID) received from the motorist's phone (Step 410). Again as described previously a PIN security number may be selected.

If the motorist's current transaction has not yet expired, the IVR system requests the motorist to select if they want to top-up or start a new transaction. The motorist selects the option to top-up using the keypad on their mobile phone, and this information is communicated to the IVR as DTMF tones (Step 415).

The IVR system requests the motorist to enter the number of minutes parking they wish to top up by or the amount (euro/cents/etc.) of parking they wish to top up by. The motorist enters this using the keypad on their mobile phone (generally in the lowest denomination), and this information is communicated to the IVR as DTMF tones (Step 420).

The CPS sends a transaction initiation message to the bay meter in the form of an encrypted SMS using the GSM network and the motorist is instructed that they may now hang up the call (Step 425). As before a query of the SMSC is conducted to ascertain whether the message has been delivered or whether the message should be deleted (Step 430, 435). On receipt of the communication the meter activates and displays a message confirming the transaction (Step 440). If the message has not been delivered, it is deleted and the user is informed accordingly (Step 445).

The present invention may also be used for a concept called virtual parking. Virtual parking solutions are mobile based parking solutions which do not require any existing or new street furniture (meters, etc.). When registering for the virtual parking service a motorist generally receives a bar-code or RF (radio frequency) tag by mail which is unique to that motorist. They then display the bar-code/tag prominently in the window of the vehicle that they are intending to park. The parking transaction process is similar to that described with reference to the parking bays and differs only in the enforcement process for ensuring that parking has been correctly paid.

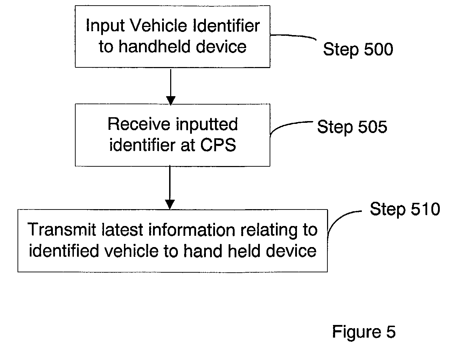

Figure 5 shows a sequence of steps exemplary of the type of steps that are conducted in order to enforce a virtual parking system. Parking enforcement officers are provided with a handheld mobile computers to assist in the enforcement process. These units have built in bar-code/RF scanners. When alongside a parked vehicle in a zone operating a virtual parking system, the officer will scan the bar-code/RF tag using the scanner feature on the unit (Step 500). If the bar-code/RF tag is not visible or inaccessible then the warden can use the keypad on the unit to manually enter the registration number of the vehicle.

The scanned/entered data is automatically transmitted via its inbuilt GPRS (General Packet Radio Service) modem to the CPS where latest parking transaction information for that motorist/vehicle will be retrieved (Step 505). It will be appreciated that the transmission could be substituted into a number of different wireless protocols all having their various advantages & limitations e.g. GSM data call, SMS, USSD, radio transmission, etc., without departing from the method of the present invention. However, as will be appreciated by those skilled in the art, GPRS by far offers the most efficient & economic options with a minimal operational overhead.

The CPS returns this information to the handheld unit via GPRS supplying details of the motorists last transaction, registration number information (for verification) and an indication as to whether that last parking transaction has expired (Step 510). Based on this information, a decision is left to enforcement officer on whether or not a parking violation has occurred and a parking ticket should be printed.

Similar to bay meters, the advantage of the virtual parking system is that you don't have to be near your vehicle in order to carry out a mobile parking payment transaction as there is no ticket issued. This means that you can extend your parking time while in the office, shop, etc. Extending the transaction can be done via mobile call, SMS, or Web.

It will be appreciated that hereinbefore has been described a billing routing methodology and system that enables a remote user to conduct a transaction at a remote terminal and be billed for that transaction by a payment/billing agent appropriate to that user. The invention has been described with specific reference to application in a parking environment but it will be appreciated that the applications surrounding the billing engine are extremely interchangeable. Accordingly, implementation of the present invention can be used to provide a range of services and once these are m-commerce services based on an interaction with, or identification of, the customer's mobile phone at some point in the process then the exact same billing engine can be employed. The same process, described above with reference to parking meters, could be applied for example to a vending arrangement, simply by replacing the parking meter with a vending machine - instead of a ticket being printed at the end of the process, a drink is dispensed. From a usage perspective the user would call a different number to the parking service and be presented with a slightly different set of IVR prompts e.g.:
'Please enter the vending machine number' 'Please enter amount you wish to credit vending machine with' or 'Please enter the product number you wish to purchase'.

As will be appreciated although the nature of the transaction may differ, the interaction between the user, the remote terminal, and the payment agent that is facilitated by the system of the present invention is the same. With something like cinema tickets, the end result might be that the system of the present invention lets the cinema know that a certain customer has purchased x tickets for a film at a certain time and they will be collected, while the user IVR experience might be that they have to select the cinema they wish to go to and the film they wish to see, but as far as user identification, authorisation & billing is concerned, exactly the same underlying billing process is employed. Yet a further non-limiting application would be the payment of a user's tickets for a mass transit system such as public transport where a user wishes to obtain a ticket and have that amount billed to a billing account associated with their mobile telephone. Such a system could be implemented to bill the amount directly to the mobile telephone account or for example to a specific account that the user has registered as being suitable for effecting payment for the specific type of transaction. It will be appreciated therefore that, as the system of the present invention effects the choice of billing agent on an analysis of the access number used by the consumer to the service and also the user, a specific customer could effect the formation of profiles on the system of the present invention that would enable a first billing agent to be used for a first type of transaction, for example car parking, and a second billing agent for a second type of transaction, for example obtaining a product from a vending machine.

It will therefore be appreciated that the present invention is not intended to be limited except as may be deemed necessary in the light of the appended claims.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A method of enabling a transaction by a remote user for a service having an associated access number, the method comprising the steps of:
a) receiving a request from the user via said access number at a central processing server,
b) identifying the user from the request,
c) determining a valid billing destination from a plurality of available billing destinations for the identified user, and
d) effecting an authorisation of the service for said user upon determination of a valid billing arrangement.

2. The method as claimed in claim 1 wherein the service is a payment for car parking.

3. The method as claimed in claim 1 wherein the service is the obtaining of a desired product from a vending machine.

4. The method as claimed in claim 1 wherein the service is the obtaining of a ticket or receipt from a ticket dispensing machine or ticket collection service.

5. The method as claimed in claim 1 wherein the service is the obtaining of a pass/ticket for a mass transit system.

6. The method as claimed in claim 2 wherein the type of car parking is selected from one or more of the following:
a) pay and dispay car parking
b) meter bay car parking, and/or
c) virtual parking

7. The method as claimed in claim 1 wherein the request is received from the user over a mobile telecommunication network.

8. The method as claimed in claim 7 wherein the user is identified by means of an unique identifier specific to that user for use in the mobile telecommunication network.

9. The method as claimed in claim 8 wherein the unique identifier is an IMSI associated with a mobile telecommunication device associated with the user.

10. The method as claimed in any preceding claim wherein the user is identified from the request by effecting a comparison of a user identifier specific to the user with a database of stored users.

11. The method as claimed in claim 10 wherein the database is co-located with the central processing server.

12. The method as claimed in claim 11 further comprising the step, upon not effecting a matched identifier for the received user identifier within the co-located database of:
a) querying one or more remote databases, each of the queried databases being associated with a specific one of the plurality of available billing agents, so as to determine whether the received request is associatable with a subscriber to the one or more available billing agents.

13. The method as claimed in claim 12 wherein the querying of the remote database is effected in an order based upon a "best guess" principle.

14. The method as claimed in claim 1 wherein the available billing destinations include one or more telecommunications operators.

15. A mobile commerce billing routing application system adapted to determine a correct billing destination from a plurality of available billing destinations for a transaction conducted by a mobile user, the system comprising:
a) means for receiving a transaction initiated request from a mobile user,
b) means for interrogating the request so as to determine whether the request is from an authorised user,
c) means for associating the authorised user with one of a plurality of available billing destinations, the means for associating effecting said association based on an interrogation of the request,
d) means for determining whether said authorised user is authorised to conduct said requested transaction,
e) means for authorising said transaction upon determination that the request is authorised, and
f) means for debiting said user's account at the selected billing destination.
